# EUROPEAN PATENT SPECIFICATION

(11) **EP 2 800 947 B1**
(45) Date of publication and mention of the grant of the patent: **12.02.2020**
(21) Application number: 12864658.5
(22) Date of filing: 27.12.2012
(51) Int. Cl.: G01C 3/08, G01C 11/02, G03B 15/02, G01S 17/93, G01S 17/48, G01S 17/58, G01S 17/02, H04N 5/225, G03B 13/20

(54) **COMBINED IMAGER AND RANGE FINDER**
KOMBINIERTE ABBILDUNGSVORRICHTUNG UND ENTFERNUNGSMESSER
IMAGEUR ET TÉLÉMÈTRE COMBINÉS

(30) Priority: 04.01.2012 IL 21736112; 14.06.2012 IL 22043912
(43) Date of publication of application: 12.11.2014
(73) Proprietor: Rafael Advanced Defense Systems Ltd., 31021 Haifa (IL)
(72) Inventor: LAVI, Dov, 3475616 Haifa (IL); SHAMAY, Ezra, Qiryat Bialik 2723542 (IL)
(74) Representative: Straus, Alexander
(86) International application number: PCT/IB2012/057744
(87) International publication number: WO 2013/102831

(56) References cited:
- EP-A2- 0 687 857
- WO-A1-02/082201
- WO-A2-97/01111
- US-A1- 2003 184 726
- US-A1- 2005 077 470
- US-A1- 2005 285 966
- US-A1- 2007 103 671
- US-A1- 2008 088 719
- US-A1- 2009 128 833
- US-B1- 6 502 053
- US-B1- 6 804 607

## Description

### FIELD AND BACKGROUND OF THE INVENTION

The present invention relates to rangefinders and, more particularly, to a device that performs both imaging and rangefinding.

Such devices are known in the prior art. For example, Solomon et al., US Patent No. 7,342,648, teach a device that includes four lasers that surround a camera and that emit laser beams parallel to the optical axis of the camera. Figure 1, that is adapted from Figure 3 of US 7,342,648, illustrates the principle of the operation of the device. The camera images a reflection, from the wall, of a light beam that is emitted by the first laser, at an angle of θ₁, and images a reflection, from the wall, of a light beam that is emitted by the second laser, at an angle of θ₂. Given the parallax d of the lasers relative to the optical axis of the camera, calculating the ranges r₁ and r₂ to the wall is a matter of simple trigonometry.

Typically, the camera of the device of US 7,342,648 is a video camera with a frame rate of 30 to 50 Hz. The controller of the device needs to locate, in the frames, the pixels that correspond to the reflections of the laser beams and then calculate the corresponding angles θ₁ and θ₂ and the corresponding ranges r₁ and r₂. The 30 to 50 Hz frame rate corresponds to a determination of the ranges r₁ and r₂ at most 15 to 25 times per second because the reflections of the laser beams are located in the frames by acquiring two successive frames, one with the lasers on and the other with the lasers off, and subtracting one frame from the other. There are applications in which the ranges need to be calculated faster than 15 to 25 times per second. For example, a drone reconnaissance helicopter could use the device of US 7,342,648 for imaging targets below itself at high resolution while determining its altitude relative to those targets in order to ensure that it remains at a safe altitude above those targets, except that in some cases determining the altitude above the target must be done more often than 25 times per second if the drone descends below a safe altitude above its targets.

Mounting a rangefinder in tandem with the device of US 7,342,648 might not be an acceptable solution if the drone helicopter is small and the added rangefinder would add excessive weight to the drone helicopter and would occupy valuable space in the drone helicopter that would be better used for some other purpose. In principle, the device of US 7,342,648 could be modified to use a video camera with a faster frame rate and to use a faster processor in its controller, but it would be highly advantageous to be able to modify the device of US 7,342,648 to determine ranges faster than 25 times per second without incurring the expense of a faster processor.

### SUMMARY OF THE INVENTION

According to the present invention there is provided a combined imager and rangefinder according to claim 1.

According to the present invention there is provided a method of anticipating a collision between a first body and a second according to claim 11.

A basic combined imager and rangefinder of the present invention includes an imaging sensor, an illuminator, and a controller. The imaging sensor, which typically is a video camera or a forward-looking infrared (FLIR) camera, is for acquiring images of objects in its field of view. The illuminator directs a beam of light at least in part via the field of view. The light could be visible, infrared or ultraviolet light but typically is infrared light. The controller operates the imaging sensor and the illuminator in one of two modes. In the first mode, the imaging sensor acquires full images that span substantially all of the field of view. In the second mode, the imaging sensor acquires partial images that span only a portion of the field of view that includes a reflection of the illuminator's light from one of the objects in the field of view. The controller determines, from the location, in each of at least a portion of the partial images, of a part of the partial image that images the reflection, a corresponding range to that object.

Preferably, the imaging sensor acquires the full images at a first frame rate and acquires the partial image at a second frame rate that is faster than the first frame rate.

Preferably, the controller also determines, from at least two of the locations, a rate of approach to the object whose reflections are the subject of the partial images.

Preferably, the illuminator is deployed in a fixed spatial relationship to the imaging sensor. In some preferred embodiments the illuminator directs its beam of light substantially parallel to the optical axis of the imaging sensor. In other preferred embodiments, the illuminator directs its beam of light obliquely relative to the optical axis of the imaging sensor.

In some preferred embodiments, the illuminator uses a source of coherent radiation, such as a laser, to produce its beam of light. In other preferred embodiments, the illuminator uses a source of incoherent light, such as a light-emitting diode (LED), together with collimating optics, to produce its beam of light.

Preferably, in the first mode of operation, the controller determines, from a location, in each of at least some of the full images, of a part of the full image that images the reflection, a corresponding range to an object in the field of view of the imaging sensor. If that range is less than a predetermined threshold, then the controller switches to the second mode of operation and the reflections from that object become the subject of the partial images.

Preferably, the imaging sensor includes a notch filter whose notch passes a range of wavelengths of the light from the illuminator.

Preferably, the imaging sensor includes an array of a plurality of photodetector elements. More preferably, the array is a rectangular array that includes a plurality of rows of the photodetector elements and the partial images are acquired using only a portion of the rows. Most preferably, the illuminator is deployed in a fixed spatial relationship to the imaging sensor so as to direct the light beam only into a portion of the field of view in which reflections of the light from the illuminator are imaged by that portion of the rows. Also most preferably, for each partial image subsequent to the first partial image, the portion of the rows that is used to acquire the new partial image is selected in accordance with the part, of the portion of the rows that was used to acquire the preceding partial image, that images the reflection.

Also most preferably, the imaging sensor includes two or more subpluralities of the photodetector elements. The photodetector elements of each subplurality are sensitive to only a respective range of wavelengths. The partial images are acquired using only some or all of the photodetector elements of just one of the subpluralities. For example, in one of the preferred embodiments discussed below, a Bayer filter is used to render the photodetector elements sensitive to either just blue light or to just green light or to just red and some infrared light, and the partial images are acquired using just some of the rows of only the photodetector elements that are sensitive to just red and some infrared light.

Also most preferably, the photodetector elements are active pixel sensors such as complementary metal-oxide semiconductor (CMOS) sensors.

Preferably, the part of each partial image that images the reflection includes a plurality of pixels, and the location of the part of the partial image that images the reflection is the centroid of those pixels.

The scope of the present invention also includes a vehicle, such as a helicopter, that includes the combined imager and range finder of the present invention.

A basic method of the present invention is a method of anticipating a collision between a first body and a second body. For example, in the preferred embodiments discussed below, the first body is a drone helicopter and the second body is the terrain over which the drone helicopter flies. The first body is equipped with an imaging sensor. The imaging sensor acquires successive partial images that span only a portion of the imaging sensor's field of view that includes at least part of the second body. At the same time, a beam of light is directed at the at least part of the second body. Two or more first ranges from the first body to the second body are computed, based at least in part on respective locations, in the partial images, of parts of the partial images that image reflections of the light from the illuminated at least portion of the second body. Based on the computed first ranges, for example based on the values and rates of change of the first ranges, it is decided whether a collision between the two bodies is imminent. Preferably, if a collision is imminent, the first body is secured to minimize the damage that the collision will cause to the first body.

Preferably, before the partial images are acquired, a second range from the first body to the second body is determined. The acquiring of the first images is initiated if the second range is below a predetermined threshold. More preferably, the determining of the second range includes using the imaging sensor to acquire successive full images that span substantially the whole field of view while directing the beam of light at least in part via the field of view in a manner that is synchronized with the acquiring of the full images so as to support computation of the second range. The computation of the second range is based at least in part on the location in one of the full images of a part of that full image that images a reflection of the light from the second body. Most preferably, the full images are acquired at a frame rate that is slower than the frame rate at which the partial images are acquired.

Also most preferably, during the acquiring of the full images, the beam of light is directed only intermittently, *i.e.,* less often than every other frame, via the field of view of the imaging sensor. In other words, the second distance is not computed for every pair of full images.

Preferably, the directing of the beam of light at the at least portion of the second body is synchronized with the acquiring of the partial images, as opposed to, *e.g.,* continuously illuminating the at least portion of the second body.

### BRIEF DESCRIPTION OF THE DRAWINGS

Various embodiments are herein described, by way of example only, with reference to the accompanying drawings, wherein:

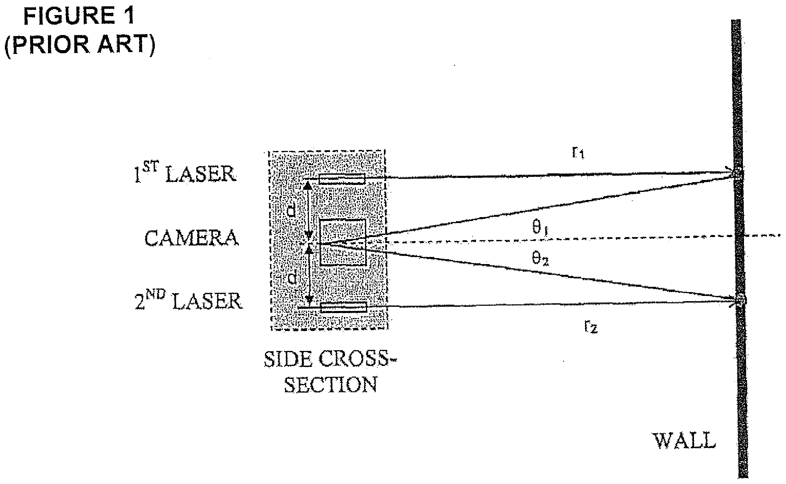

FIG. 1 illustrates the operation of the prior art device of US 7,342,648;
FIGs. 2A and 2B are high-level block diagrams of two imager/rangefinders of the present invention;
FIGs. 2C and 2D illustrate the angular sensitivity of the imager/rangefinder of FIG. 2A;
FIG. 3 is a schematic high-level diagram of an imaging sensor;
FIGs. 4A and 4B illustrate the definition of the field of view of the imaging sensor of FIG. 3;
FIG. 5 illustrates the operation of the imager/rangefinder of FIG. 2B;
FIG. 6 illustrates a drone helicopter of the present invention;
FIG. 7 illustrates a variant of the imaging sensor of FIG. 3 that is based on a standard color video camera;
FIG. 8 illustrates a Bayer filter.

### DESCRIPTION OF THE PREFERRED EMBODIMENTS

The principles and operation of a combined imager and rangefinder according to the present invention may be better understood with reference to the drawings and the accompanying description.

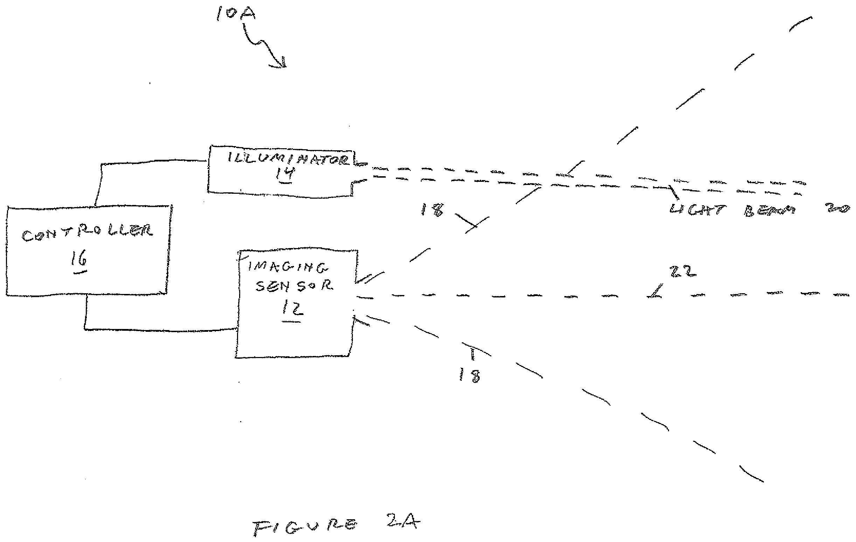

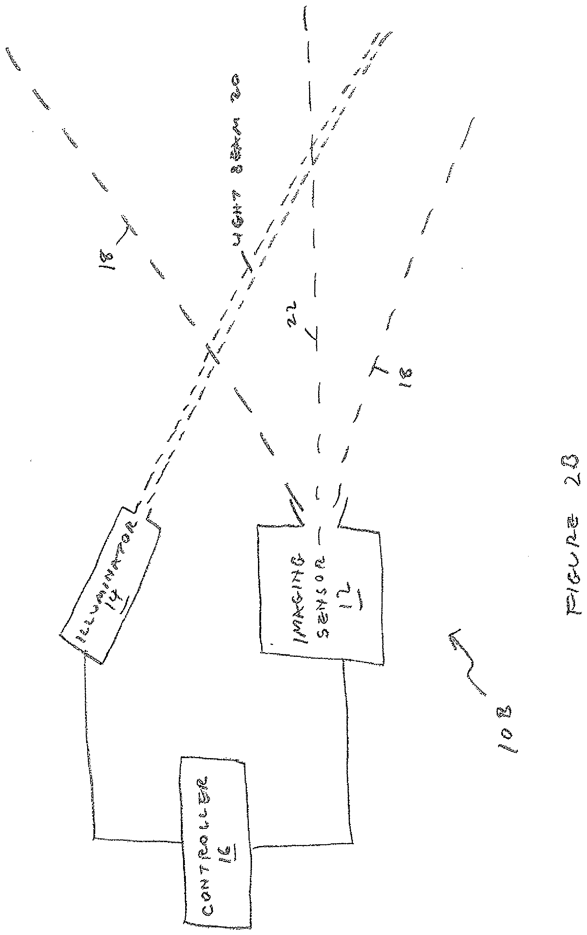

Referring again to the drawings, Figures 2A and 2B are high-level block diagrams of two combined imager/rangefinders **10A** and **10B** of the present invention. Both combined imager/rangefinders **10A** and **10B** include an imaging sensor **12,** an illuminator **14,** and a controller **16.** Imaging sensor **12** typically is a camera such as a video camera, for imaging in the visible portion of the electromagnetic spectrum, or a forward looking infrared (FLIR) camera, for imaging in the infrared portion of the electromagnetic spectrum, *e.g*. in the near-infrared and mid-infrared (wavelengths between 0.8 microns and 12 microns) but preferably at wavelengths between three microns and five microns. Illuminator **14** typically is a laser but could also be a light-emitting diode with collimating optics. Imaging sensor **12** acquires images within a conical or pyramidal field of view whose boundaries are indicated by dashed lines **18.** Illuminator **14** provides a collimated beam of light **20** that intersects the field of view of imaging sensor **12.** Controller **16** coordinates the operation of imaging sensor **12** and illuminator **14** as described below to determine the range from combined imager/rangefinder **10A** or **10B** to an object within the field of view of imaging sensor **12.** In combined imager/rangefinder **10A**, illuminator **14** is fixed in place relative to imaging sensor **12** so that light beam **20** is parallel to the optical axis **22** of imaging sensor **12.** In combined imager/rangefinder **10B**, illuminator **14** is fixed in place relative to imaging sensor **12** so that light beam **20** crosses the field of view of imaging sensor **12** obliquely relative to the optical axis **22** of imaging sensor **12.**

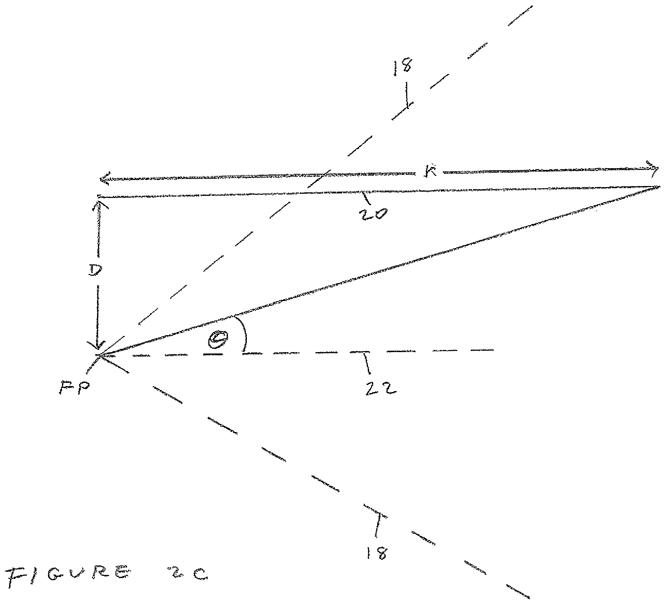

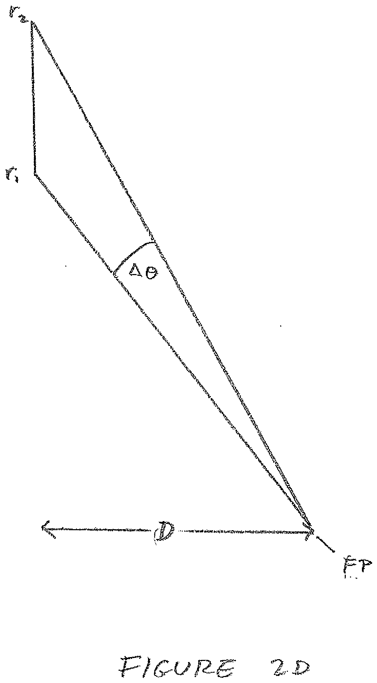

Figures 2C and 2D illustrate the geometry of the angular sensitivity of combined imager/rangefinder **10A**, with the parallel optical axes of imaging sensor **12** and illuminator **14** separated by a distance *D*. **"FP"** denotes the focal point of imaging sensor **12.**

In Figure 2C, a reflection from an object at a range *r* from combined imager/rangefinder **10A** is imaged at an angle θ whose relationship to *r* and *D* is cot(θ)=*r*/*D*. The angular sensitivity of combined imager/rangefinder **10A** increases with decreasing *r* (as long as the object remains in the field of view of imaging sensor **12**) because the magnitude of the slope of the function arccot(*x*) increases monotonically as *x* approaches zero from above.

Figure 2D illustrates how the sensitivity of imager/rangefinder **10A** to a change in range from *r₂* to *r*₁ increases with increasing *D.* The angle Δθ subtended by the reflections from *r*₁ and *r₂* is arctan(*r*₂/*D*)-arctan(*r*₁/*D*), whose derivative with respect to *D* is (*r*₂²*-r*₁²)/[(*D*²+*r*₂²)(*D*²+*r*₁²)] which is strictly positive.

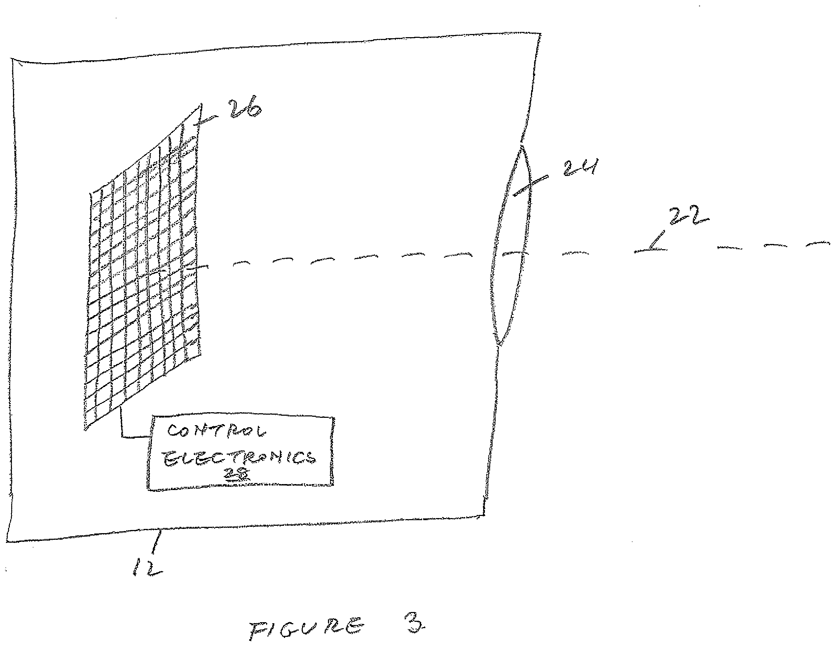

Figure 3 is a schematic high-level diagram of imaging sensor **12.** Imaging sensor **12** includes a rectangular array **26** of photodetector elements, optics **24,** represented in Figure 3 by a convex lens, that focus light from the field of view of imaging sensor **12** onto array **26,** and control electronics **26** that uses array **26** to acquire images of the field of view of imaging sensor **12.** Optical axis **22** is the optical axis of optics **24.** The photodetector elements preferably are active pixel sensors such as complementary metal-oxide semiconductor (CMOS) detectors but could also be other kinds of photodetectors, for example, charge coupled detectors (CCDs) or photodiodes.

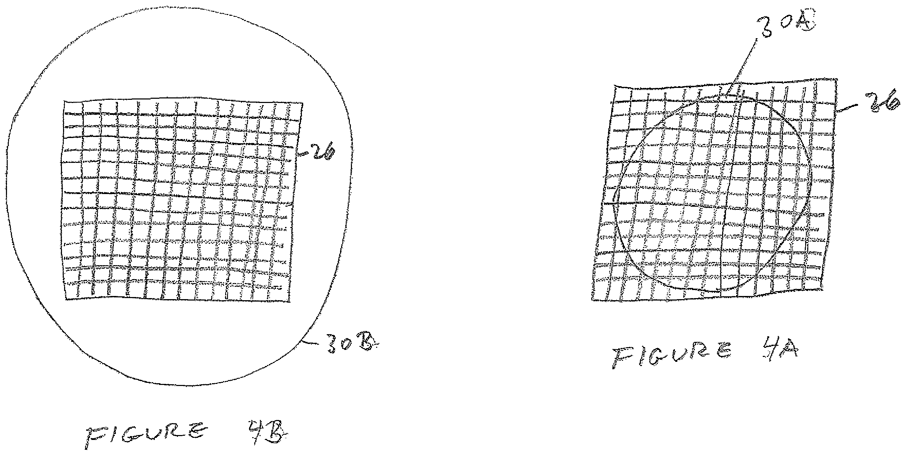

Figures 4A and 4B illustrate that the field of view of imaging sensor **12** is defined by optics **24** and array **26** in combination. In Figure 4A, circle **30A** indicates the portion of array **26** on which light from optics **24** is focused. The field of view of imaging sensor **12** then is a conical frustrum, extending indefinitely outward from the portion of array **26** that is bounded by circle **30A,** whose axis of symmetry is optical axis **22.** In Figure 4B, the light from optics **24** is focused on a plane that includes array **26** and extends beyond array **26.** The field of view of imaging sensor **12** then is a pyramidal frustrum, extending indefinitely outward from all of array **26,** whose axis of symmetry is optical axis **22.**

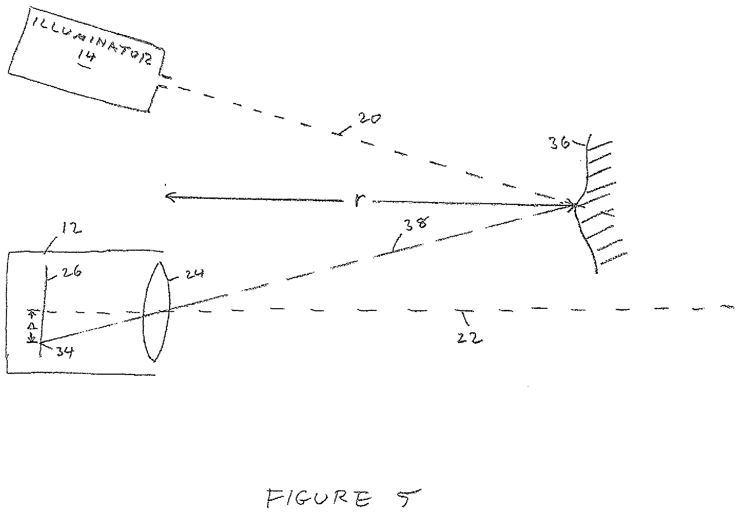

Imager/rangefinder **10A** operates as a rangefinder substantially as described above for the device of US 7,342,648. The operation of imager/rangefinder **10B** as a rangefinder is similar and now will be described with reference to Figure 5. Light **20** from illuminator **14** is reflected from an object **36** in the field of view of imaging sensor **12.** The reflected light, represented in Figure 5 as a reflected ray **38,** is focused by optics **24** on a point **34** on array **26.** The displacement Δ of point **34** along array **26** from optical axis **22** is a monotonic function of where along light beam **20** the reflection point is located and so indicates the range r from an arbitrary point in the imager/rangefinder to object **36.** This function can be obtained in advance by tracing rays from various points on array **26** via optics **24** to light beam **20,** or by calibrating imager/rangefinder **10B** relative to objects **36** located at known ranges r from imager/rangefinder **10B**. Note that imager/rangefinder **10A** is a special case of imager/rangefinder **10B**, the special case of light beam **20** being parallel to optical axis **22.** Controller **16** identifies, in a frame acquired by imaging sensor **12,** the pixel that images the reflected light, identifies the photodetector element at point **34** that corresponds to that pixel, and calculates or looks up in a table the corresponding range *r*. It can be shown that the angular sensitivity of imager/rangefinder **10B**, as a function of range *r*, is similar to the angular sensitivity of imager/rangefinder **10A**.

In practice, because of effects such as the finite width of light beam **20,** the light reflected from object **36** is focused on several of the photodetector elements of array **26.** Point **34** is determined from the centroid of the pixels of the frame that image reflected light **38.**

One advantage of imager/rangefinder **10B** over imager/rangefinder **10A** is that imager/rangefinder **10B** exploits more of the width of array **26** than imager/rangefinder **10A** for imaging reflections of light beam **20.** In imager/rangefinder **10A** the reflections of light beam **20** are focused only to the side of photodetector array **26** adjacent to illuminator **14.** In imager/rangefinder **10B** the reflections of light beam **20** are focused on both sides of photodetector array **26.** It follows that the estimation of the range *r* by imager/rangefinder **10B** is inherently more accurate than the estimation of the range *r* by imager/rangefinder **10A**. If light beam **20** is parallel to the opposite boundary **18** of the field of view of imaging sensor **12** then imaging rangefinder **10B** exploits the full width of photodetector array **26.** Imaging rangefinder **10B** also is inherently capable of measuring closer ranges *r* than imaging rangefinder **10A**. In fact, the accuracy of imaging rangefinder **10B** at short ranges *r* can be increased by making the obliquity of illuminator **14** relative to optical axis **22** so great that light beam **20** crosses all the way across the field of view of imaging sensor **12,** at the expense of losing the ability to measure long ranges *r*.

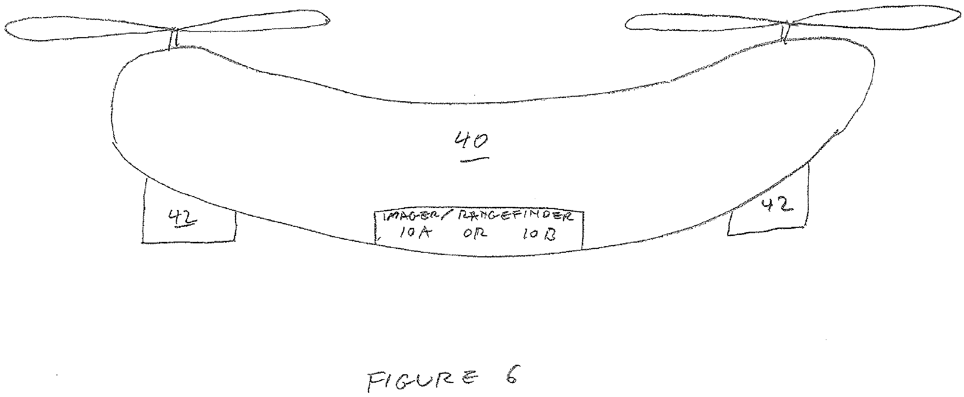

Figure 6 shows a drone reconnaissance helicopter **40** equipped with imager/rangefinder **10A** or **10B**. In normal operation, imager/rangefinder **10A** or **10B** is used to acquire images of the terrain over which helicopter **40** flies. In this "normal" mode of operation, imager/rangefinder **10A** or **10B** acquires images of the full field of view of imaging sensor **12,** under the control of controller **16,** at the normal frame rate of imaging sensor **12,** *e.g.,* 30 to 50 Hz. Occasionally, controller **16** activates illuminator **14** for the duration of one frame. Controller **16** registers the full image of that frame with the full image of the preceding frame and then subtracts that image from the preceding image to obtain a difference image. The most prominent feature in the difference image is pixels that image light **38** that is reflected from the terrain. Controller **16** identifies these pixels and computes the altitude *r* of helicopter **40** above the terrain as described above. Illuminator **14** is activated only occasionally in case the reconnaissance target is suspected of having a sensor for detecting light beam **20** and initiating defensive or evasive action.

In alternative embodiments of the method of the present invention, a navigation device such as a GPS receiver is used in addition to or in place of imager/rangefinder **10A** or **10B** in "normal" mode to measure the altitude of helicopter **40** above the terrain.

If, during the "normal" mode of operation, controller **16** determines that the altitude of helicopter **40** above the targeted terrain is dangerously low, controller **16** switches to "emergency" mode. Helicopter **40** being dangerously low may indicate failure of the propulsive system of helicopter **40** so that a crash onto the targeted terrain is imminent. In "emergency" mode, controller **16** increases the frame rate of imaging sensor **12** to *e.g.* 250 Hz and instructs imaging sensor **12** to acquire partial images that include only pixels from only a portion of the photodetector elements of photodetector array **26,** specifically, the rows that include the last photodetector elements to image reflected light **38** during "normal" mode plus a small number of guard rows in case point **34** has moved since the last altitude measurement. Alternatively, after several partial images have been acquired, the change with time, of which portion of the rows of photodetector array **26** images reflected light **38,** from one partial image to the next, is used to decide which rows (plus, for safety, a small number of guard rows) are to be used to acquire the next partial image. The initial change with time on array **26** of which photodetectors image reflected light **38** also could be inferred from the change with time of which photodetectors image reflected light **38** towards the end of the "normal" mode of operation. In principle, the "emergency" mode could be effected using just one row of photodetectors to acquire each partial image but this is not a preferred mode of the present invention. That only a portion of the photodetector elements of array **26** are interrogated in "emergency" mode allows controller **16** to be based on the same processor that processes full images in "normal" mode despite the increased frame rate of "emergency" mode. In "emergency" mode, controller **16** activates illuminator **14** for the duration of every other frame, in order to take the difference of each pair of partial images and so compute the altitude of helicopter **40** at half the emergency frame rate and the rate of change of the altitude of helicopter **40** at one quarter of the emergency frame rate. If, based on the computed altitude and the computed rate of descent, controller **16** decides that a crash is imminent, controller **16** initiates defensive action to secure helicopter **42** against damage upon impact. For example, helicopter **40** could be equipped with an airbag protection system **42,** similar to the airbag protection systems described in US Patent No. 5,992,794 to Rotman et al. and in US Patent Application Publication No. 2010/0181421 to Albagli et al., as illustrated in Figure 6.

As noted above, the functionality of imager/rangefinder **10A** or **10B** in detecting and coping with emergency situations as described above also could be implemented using a conventional imager and a separate conventional rangefinder. The advantage of an imager/rangefinder of the present invention is that it combines both functionalities in the same device, which is important in *e.g.* a small drone helicopter **40** in which space and weight are at a premium.

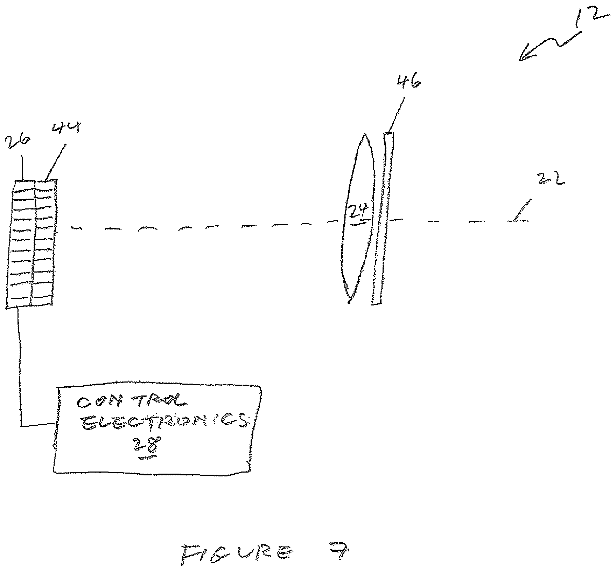

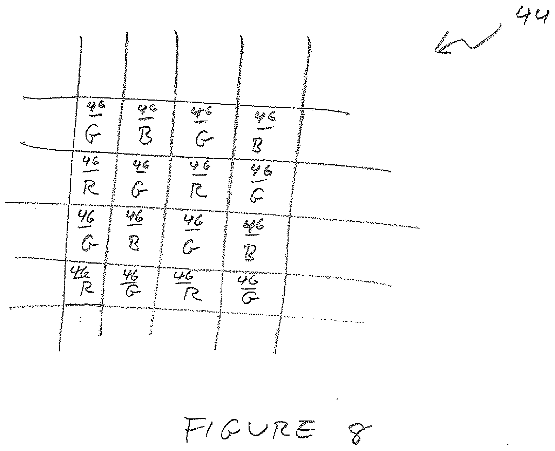

Figure 7 is a side schematic view of a variant of imaging sensor **12** that is based on a standard color video camera and that is intended to be used together with an illuminator **14** that is an infrared laser. In such a video camera, photodetector element array **12** is covered by a filter **44,** such as a Bayer filter, that passes only green light to one-half of the photodetector elements, only blue light to one-quarter of the photodetector elements, and only red light and infrared light to the remaining quarter of the photodetector elements. Figure 8 shows how the sub-filters **48** of a standard Bayer filter are arranged. The sub-filters **48** labeled "B" pass only blue light. The sub-filters **48** labeled "G" pass only green light. The sub-filters **48** labeled R pass only red and infrared light. In a standard color video camera, a Bayer filter **44** is mounted so that there is a 1:1 correspondence between sub-filters **48** and the photodetector elements of array **12** and each sub-filter **48** filters only the light that is focused to its respective photodetector element.

A standard color video camera also includes another filter, associated with optics **24,** for filtering out infrared radiation. Imaging sensor **12** of Figure 7 includes a similar filter **46** that filters out most infrared radiation but has a notch for passing a narrow band of infrared wavelengths, specifically, the band of wavelengths in infrared laser beam **20** from the associated illuminator **14.** In an imager/rangefinder **10A** or **10B** that includes such an imaging sensor **12** and such an illuminator **14,** controller **16** does rangefinding based only on pixels that image the red and infrared light.

While the invention has been described with respect to a limited number of embodiments, it will be appreciated that many variations, modifications and other applications of the invention may be made. Therefore, the claimed invention as recited in the claims that follow is not limited to the embodiments described herein.

## Claims

1. A vehicle (40) comprising a combined imager and rangefinder (10A, 10B) mounted on the vehicle, the combined imager and rangefinder comprising:
(a) an imaging sensor (12) for acquiring images of objects in a field of view (18);
(b) an illuminator (14) for directing a beam of light (20) at least in part via said field of view; and
(c) a controller (16) for operating said imaging sensor (12) and said illuminator (14) in a first mode in which said imaging sensor acquires full images that span substantially all of said field of view,
**characterized in that** said controller (16) is further configured to determine a first range from the vehicle (40) to one of said objects, and to switch, if said first range is less than a predetermined threshold, to operate said imaging sensor (12) and said illuminator (14) in a second mode in which said imaging sensor (12) acquires partial images that span only a portion of said field of view that includes a reflection of said beam of light (20) from said one object, and to determine from a location, in each of at least a portion of said partial images, of a part of said each partial image that images said reflection, a corresponding range to said one object;
wherein said imaging sensor (12) acquires said full images in said first mode at a first frame rate and acquires said partial images in said second mode at a second frame rate that is faster than said first frame rate.

2. The vehicle of claim 1, wherein said controller (16) also determines, from at least two said locations, a rate of approach to said one object.

3. The vehicle of claim 1, wherein said illuminator (14) is deployed in a fixed spatial relationship to said imaging sensor (12).

4. The vehicle of claim 1, wherein said illuminator (14) includes a source of coherent light.

5. The vehicle of claim 1, wherein said illuminator (14) includes a source of incoherent light and optics for collimating said incoherent light to produce said beam of light.

6. The vehicle of claim 1, wherein, while operating said imaging sensor (12) and said illuminator (14) in said first mode, said controller (16) determines said first range from a location, in each of at least a portion of said full images, of a part of said each full image that images said reflection.

7. The vehicle of claim 1, wherein said imaging sensor (12) includes a notch filter (46) that passes a narrow band of wavelengths of said light.

8. The vehicle of claim 1, wherein said imaging sensor (12) includes an array (26) of a plurality of photodetector elements.

9. The vehicle of claim 8, wherein said array (26) includes a plurality of rows and wherein said partial images are acquired using fewer of said rows than are used to acquire said full images.

10. The vehicle finder of claim 1, wherein said part of said each partial image that images said reflection includes a plurality of pixels and wherein said location is a centroid of said plurality of pixels.

11. A method of anticipating a collision between a vehicle (40) and a second body, comprising the steps of:
(a) equipping the vehicle with an imaging sensor (12) that has a field of view (18) and an illuminator (14);
(b) acquiring, using said imaging sensor (12), successive full images that span substantially all of said field of view;
(c) determining a first range from the vehicle (40) to the second body;
**characterised by** the further step of:
(d) if said first range is below a predetermined threshold:
(i) acquiring, using said imaging sensor (12), successive partial images that span only a portion, of said field of view, that includes at least a portion of the second body while directing a beam of light (20) from the illuminator (14) at said at least portion of the second body,
(ii) computing a plurality of range measurements, from the vehicle to the second body, based at least in part on respective locations within each of a plurality of said partial images, of a part of said each partial image that images a reflection of said beam of light (20) from said at least portion of the second body, and
(iii) deciding, based on said range measurements, whether a collision between the vehicle and the second body is imminent;
wherein said full images are acquired at a first frame rate and wherein said partial images are acquired at a second frame rate that is faster than said first frame rate.

12. The method of claim 11, further comprising the step of:
(e) if said collision is determined to be imminent, securing the vehicle to minimize damage to the vehicle caused by said collision.

13. The method of claim 11, wherein said determining of said first range includes said acquiring of said successive full images, while directing said beam of light at least in part via said field of view in a manner that is synchronized with said acquiring of said full images so as to support computation of said first range based at least in part on a location within one of said full images of a part of said one full image that images a reflection of said light from the second body.

14. The method of claim 11, wherein said directing of said beam of light at said at least portion of the second body during said acquiring of said partial images is synchronized with said acquiring of said partial images.

## Patentansprüche

1. Fahrzeug (40), das einen an dem Fahrzeug montierten kombinierten Bildgeber und Entfernungsmesser (10A, 10B) umfasst, wobei der kombinierte Bildgeber und Entfernungsmesser umfasst:
(a) einen bildgebenden Sensor (12) zum Erlangen von Bildern von Objekten in einem Sichtfeld (18);
(b) eine Beleuchtungseinrichtung (14) zum Lenken eines Lichtstrahls (20) mindestens teilweise über das Sichtfeld; und
(c) eine Steuereinrichtung (16) zum Betreiben des bildgebenden Sensors (12) und der Beleuchtungseinrichtung (14) in einem ersten Modus, in dem der bildgebende Sensor vollständige Bilder erlangt, die sich im Wesentlichen über das ganze Sichtfeld erstrecken,
**dadurch gekennzeichnet, dass** die Steuereinrichtung (16) ferner dazu ausgelegt ist, einen ersten Bereich von dem Fahrzeug (40) bis zu einem der Objekte zu bestimmen, und, wenn der erste Bereich geringer als ein vorbestimmter Schwellenwert ist, zum Betrieb des bildgebenden Sensors (12) und der Beleuchtungseinrichtung (14) in einem zweiten Modus zu wechseln, in dem der bildgebende Sensor (12) Teilbilder erlangt, die sich nur über einen Abschnitt des Sichtfelds erstrecken, der eine Reflexion des Lichtstrahls (20) von dem einen Objekt umfasst, und dazu, von einer Position, in jedem von mindestens einem Abschnitt der Teilbilder, eines Teils von jedem Teilbild, der die Reflexion abbildet, einen entsprechenden Bereich zu dem einen Objekt zu bestimmen;
wobei der bildgebende Sensor (12) die vollständigen Bilder in dem ersten Modus mit einer ersten Bildfrequenz erlangt und die Teilbilder in dem zweiten Modus mit einer zweiten Bildfrequenz, die schneller als die erste Bildfrequenz ist, erlangt.

2. Fahrzeug nach Anspruch 1, wobei die Steuereinrichtung (16) zudem, von mindestens zwei der Positionen aus, eine Annäherungsrate zu dem einen Objekt bestimmt.

3. Fahrzeug nach Anspruch 1, wobei die Beleuchtungseinrichtung (14) in einer festen räumlichen Beziehung zu dem bildgebenden Sensor (12) eingesetzt wird.

4. Fahrzeug nach Anspruch 1, wobei die Beleuchtungseinrichtung (14) eine Quelle von kohärentem Licht umfasst.

5. Fahrzeug nach Anspruch 1, wobei die Beleuchtungseinrichtung (14) eine Quelle von inkohärentem Licht und eine Optik zum Kollimieren des inkohärenten Lichts zum Erzeugen des Lichtstrahls umfasst.

6. Fahrzeug nach Anspruch 1, wobei, während des Betriebs des bildgebenden Sensors (12) und der Beleuchtungseinrichtung (14) in dem ersten Modus die Steuereinrichtung (16) den ersten Bereich von einer Position, in jedem von mindestens einem Abschnitt der vollständigen Bilder, eines Teils von jedem vollständigen Bild, der die Reflexion abbildet, bestimmt.

7. Fahrzeug nach Anspruch 1, wobei der bildgebende Sensor (12) einen Kerbfilter (46) umfasst, das ein enges Band von Wellenlängen des Lichts durchlässt.

8. Fahrzeug nach Anspruch 1, wobei der bildgebende Sensor (12) eine Anordnung (26) einer Mehrzahl von Photodetektorelementen umfasst.

9. Fahrzeug nach Anspruch 8, wobei die Anordnung (26) eine Mehrzahl von Reihen umfasst und wobei die Teilbilder unter Verwendung von weniger der Reihen erlangt werden, als zum Erlangen der vollständigen Bilder verwendet werden.

10. Fahrzeugmesser nach Anspruch 1, wobei der Teil von jedem Teilbild, der die Reflexion abbildet, eine Mehrzahl von Pixeln umfasst und wobei die Position ein Schwerpunkt der Mehrzahl von Pixeln ist.

11. Verfahren zum Vorhersagen eines Zusammenstoßes zwischen einem Fahrzeug (40) und einem zweiten Körper, das die Schritte umfasst von:
(a) Ausstatten des Fahrzeugs mit einem bildgebenden Sensor (12), der ein Sichtfeld (18) aufweist, und einer Beleuchtungseinrichtung (14);
(b) Erlangen, unter Verwendung des bildgebenden Sensors (12), von aufeinander folgenden vollständigen Bildern, die sich im Wesentlichen über das ganze Sichtfeld erstrecken;
(c) Bestimmen eines ersten Bereichs von dem Fahrzeug (40) zu dem zweiten Körper;
ferner **gekennzeichnet durch** die Schritte von:
(d) wenn der erste Bereich geringer als ein vorbestimmter Schwellenwert ist:
(i) Erlangen, unter Verwendung des bildgebenden Sensors (12), von aufeinander folgenden Teilbildern, die sich nur über einen Abschnitt des Sichtfels, der mindestens einen Abschnitt des zweiten Körpers umfasst, erstrecken, während ein Lichtstrahl (20) von der Beleuchtungseinrichtung (14) auf den mindestens Abschnitt des zweiten Körpers gelenkt wird, und
(ii) Berechnen einer Mehrzahl von Bereichsmessungen, von dem Fahrzeug zu dem zweiten Körper, zumindest teilweise auf Grundlage entsprechender Positionen innerhalb jedes einer Mehrzahl der Teilbilder, eines Teils von jedem Teilbild, der eine Reflexion des Lichtstrahls (20) von dem mindestens einen Abschnitt des zweiten Körpers abbildet; und
(iii) Entscheiden, auf Grundlage der Bereichsmessungen, ob ein Zusammenstoß zwischen dem Fahrzeug und dem zweiten Körper bevorsteht;
wobei die vollständigen Bilder mit einer ersten Bildfrequenz erlangt werden und wobei die Teilbilder mit einer zweiten Bildfrequenz, die schneller als die erste Bildfrequenz ist, erlangt werden.

12. Verfahren nach Anspruch 11, das ferner die Schritte umfasst von:
(e) wenn bestimmt wird, dass der Zusammenstoß bevorsteht, Sichern des Fahrzeugs zum Minimieren von durch den Zusammenstoß verursachtem Schaden an dem Fahrzeug.

13. Verfahren nach Anspruch 11, wobei das Bestimmen des ersten Bereichs das Erlangen der aufeinander folgenden vollständigen Bilder umfasst, während der Lichtstrahl mindestens teilweise in einer Weise, die mit dem Erlangen der vollständigen Bilder synchronisiert wird, derart über das Sichtfeld gelenkt wird, dass die Berechnung des ersten Bereichs zumindest teilweise auf Grundlage einer Position innerhalb eines der vollständigen Bilder eines Teils von dem einen vollständigen Bild, der eine Reflexion des Lichtstrahls von dem zweiten Körper abbildet, unterstützt wird.

14. Verfahren nach Anspruch 11, wobei das Lenken des Lichtstrahls auf den mindestens Abschnitt des zweiten Körpers während des Erlangens der Teilbilder mit dem Erlangen der Teilbilder synchronisiert wird.

## Revendications

1. Véhicule (40) comprenant un imageur et un télémètre combinés (10A, 10B) montés sur le véhicule, l'imageur et le télémètre combinés comprenant :
(a) un capteur d'imagerie (12) pour acquérir des image d'objets dans un champ de vision (18) ;
(b) un illuminateur (14) pour diriger un faisceau de lumière (20) au moins en partie à travers ledit champ de vision ; et
(c) un dispositif de commande (16) pour faire fonctionner ledit capteur d'imagerie (12) et ledit illuminateur (14) dans un premier mode dans lequel ledit capteur d'imagerie acquiert des images entières qui couvrent sensiblement la totalité dudit champ de vision,
**caractérisé par le fait que** ledit dispositif de commande (16) est en outre configuré pour déterminer une première distance allant dudit véhicule (40) à l'un desdits objets, et pour commuter, si ladite première distance est inférieure à un seuil prédéterminé, pour faire fonctionner ledit capteur d'imagerie (12) et ledit illuminateur (14) dans un second mode dans lequel ledit capteur d'imagerie (12) acquiert des images partielles qui couvrent uniquement une partie dudit champ de vision qui comprend une réflexion dudit faisceau de lumière (20) à partir dudit objet, et pour déterminer, à partir d'un emplacement, dans chacune d'au moins une partie desdites images partielles, d'une partie de chaque image partielle précitée qui représente ladite réflexion, une distance correspondante audit objet ;
ledit capteur d'imagerie (12) acquérant lesdites images entières dans ledit premier mode à une première cadence et acquérant lesdites images partielles dans ledit second mode à une seconde cadence qui est plus rapide que ladite première cadence.

2. Véhicule selon la revendication 1, dans lequel ledit dispositif de commande (16) détermine également, à partir d'au moins deux emplacements précités, une vitesse d'approche vers ledit objet.

3. Véhicule selon la revendication 1, dans lequel ledit illuminateur (14) est déployé en relation spatiale fixe par rapport audit capteur d'imagerie (12).

4. Véhicule selon la revendication 1, dans lequel ledit illuminateur (14) comprend une source de lumière cohérente.

5. Véhicule selon la revendication 1, dans lequel ledit illuminateur (14) comprend une source de lumière incohérente et une optique pour collimater ladite lumière incohérente afin de produire ledit faisceau de lumière.

6. Véhicule selon la revendication 1, dans lequel, alors qu'il fait fonctionner ledit capteur d'imagerie (12) et ledit illuminateur (14) dans ledit premier mode, ledit dispositif de commande (16) détermine ladite première distance à partir d'un emplacement, dans chacune d'au moins une partie desdites images entières, d'une partie de chaque image entière précitée qui représente ladite réflexion.

7. Véhicule selon la revendication 1, dans lequel ledit capteur d'imagerie (12) comprend un filtre d'absorption (46) qui laisse passer une bande étroite de longueurs d'onde de ladite lumière.

8. Véhicule selon la revendication 1, dans lequel ledit capteur d'imagerie (12) comprend un réseau (26) d'une pluralité d'éléments de photodétecteur.

9. Véhicule selon la revendication 8, dans lequel ledit réseau (26) comprend une pluralité de rangées et lesdites images partielles sont acquises en utilisant moins de rangées que celles utilisées pour acquérir lesdites images entières.

10. Télémètre de véhicule selon la revendication 1, dans lequel ladite partie de chaque image partielle précitée qui représente ladite réflexion comprend une pluralité de pixels et ledit emplacement est un centroide de ladite pluralité de pixels.

11. Procédé pour anticiper une collision entre un véhicule (40) et un second corps, comprenant les étapes :
(a) équiper le véhicule d'un capteur d'imagerie (12) qui a un champ de vision (18) et d'un illuminateur (14) ;
(b) acquérir, à l'aide dudit capteur d'imagerie (12), des images entières successives qui couvrent sensiblement la totalité dudit champ de vision ;
(c) déterminer une première distance du véhicule (40) au second corps ;
**caractérisé par le fait qu'**il comprend en outre l'étape :
(d) si ladite première distance est inférieure à un seuil prédéterminé :
(i) acquérir, à l'aide dudit capteur d'imagerie (12), des images partielles successives qui couvrent uniquement une partie, dudit champ de vision, qui comprend au moins une partie du second corps tout en dirigeant un faisceau de lumière (20) à partir de l'illuminateur (14) au niveau de ladite au moins une partie du second corps,
(ii) calculer une pluralité de mesures de distance, du véhicule au second corps, sur la base, au moins en partie, d'emplacements respectifs à l'intérieur de chacune d'une pluralité desdites images partielles, d'une partie de chaque image partielle précitée qui représente une réflexion dudit faisceau de lumière (20) à partir de ladite au moins une partie du second corps, et
(iii) décider, sur la base desdites mesures de distance, si une collision entre le véhicule et le second corps est imminente ;
lesdites images entières étant acquises à une première cadence et lesdites images partielles étant acquises à une seconde cadence qui est plus rapide que ladite première cadence.

12. Procédé selon la revendication 11, comprenant en outre l'étape :
(e) si ladite collision est déterminée comme étant imminente, sécuriser le véhicule pour rendre minimal un endommagement du véhicule causé par ladite collision.

13. Procédé selon la revendication 11, dans lequel ladite détermination de ladite première distance comprend ladite acquisition desdites images entières successives, tout en dirigeant ledit faisceau de lumière au moins en partie à travers ledit champ de vision d'une manière qui est synchronisée avec ladite acquisition desdites images entières de façon à prendre en charge un calcul de ladite première distance sur la base, au moins en partie, d'un emplacement à l'intérieur de l'une desdites images entières d'une partie de ladite image entière qui représente une réflexion de ladite lumière à partir du second corps.

14. Procédé selon la revendication 11, dans lequel ladite direction dudit faisceau de lumière au niveau de ladite au moins une partie du second corps pendant ladite acquisition desdites images partielles est synchronisée avec ladite acquisition desdites images partielles.
